# EUROPÄISCHE PATENTSCHRIFT

(11) **EP 2 884 942 B1**
(45) Veröffentlichungstag und Bekanntmachung des Hinweises auf die Patenterteilung: **27.06.2018**
(21) Anmeldenummer: 13763194.1
(22) Anmeldetag: 14.08.2013
(51) Int. Cl.: A61C 9/00, A61C 11/00

(54) **VERFAHREN ZUR REGISTRIERUNG EINZELNER DREIDIMENSIONALER OPTISCHER AUFNAHMEN ZU EINER GESAMTAUFNAHME EINER ZAHNSITUATION**
METHOD FOR RECORDING INDIVIDUAL THREE-DIMENSIONAL OPTICAL IMAGES TO FORM A GLOBAL IMAGE OF A TOOTH SITUATION
PROCÉDÉ POUR ENREGISTRER DES PRISES DE VUES OPTIQUES TRIDIMENSIONNELLES INDIVIDUELLES AFIN DE FORMER UNE PRISE DE VUE GLOBALE D'UNE SITUATION DENTAIRE

(30) Priorität: 14.08.2012 DE 102012214470
(43) Veröffentlichungstag der Anmeldung: 24.06.2015
(73) Patentinhaber: Sirona Dental Systems GmbH, 64625 Bensheim (DE)
(72) Erfinder: ADAMSON, Anders, 64297 Darmstadt (DE); LEHNER, Burkhard, 78315 Radolfzell (DE); SATTLER, Joost, 64625 Bensheim (DE); BOBACH, Tom, 64625 Bensheim (DE); THIEL, Frank, 64372 Ober-Ramstadt (DE)
(74) Vertreter: Sommer, Peter
(86) Internationale Anmeldenummer: PCT/EP2013/066993
(87) Internationale Veröffentlichungsnummer: WO 2014/027024

(56) Entgegenhaltungen:
- US-A1- 2008 176 182
- US-A1- 2012 040 311
- US-B1- 6 582 229

## Beschreibung

### Technisches Gebiet

Die Erfindung betrifft ein Verfahren zur Registrierung einzelner dreidimensionaler optischer Aufnahmen zu einer Gesamtaufnahme einer Zahnsituation umfassend einen Oberkiefer und einen Unterkiefer, wobei ein erstes 3D-Modell eines ersten Teilabschnitts des Oberkiefers und ein zweites 3D-Modell eines zweiten Teilabschnitts des Unterkiefers aus den einzelnen Aufnahmen erzeugt werden.

### Stand der Technik

Aus dem Stand der Technik sind bereits mehrere Registrierungsverfahren bekannt, bei denen einzelne nacheinander aufgenommene dreidimensionale optische Aufnahmen zu einer Gesamtaufnahme zusammengesetzt werden.

US 6 582 229 B1 offenbart ein Verfahren und eine Vorrichtung zur Bestimmung einer Achse eines oberen und eines unteren Kiefergelenks eines Patienten und zur Modellierung einer Backenbewegung um diese Achse. Dabei wird ein Bissregistrat verwendet, das seitlich gegen die Zähne der beiden Kiefer gedrückt wird, um die Lage der Kieferachse zu bestimmen.

US 2012/040311 A1 offenbart ein Verfahren zur Ausrichtung eines virtuellen Modells eines Oberkiefers und eines virtuellen Modells eines Unterkiefers in einer Bisslage, wobei ein seitlicher Abdruck von beiden Kiefern in der Bisslage erstellt wird, wobei dieser seitliche Abdruck vermessen wird, um die Anordnung der beiden Kiefer zueinander zu ermitteln.

US 2008/176182 A1 offenbart ein System und ein Verfahren zur Bestimmung einer Verschiebung des Kiefergelenks, wobei die beiden Kiefermodelle gescannt werden, um Positionierungsdaten einer ersten Aufbissposition und einer zweiten Aufbissposition zu erhalten. Die Positionierungsdaten werden verwendet, um eine Transformationsmatrix zu erzeugen, die verwendet wird, um die Position des Kiefergelenks zu ermittelt. Bei einem Ausrichtungsverfahren werden mittels eines Okklusionspapiers Okklusalpunke auf den beiden Kiefern markiert, wobei anschließend diese markierten Okklusalpunkte vermessen werden, wobei die markierten Okklusalpunkte verwendet werden, um die beiden Kiefermodelle zueinander auszurichten.

Bei bekannten Registrierungsverfahren werden übereinstimmende Bereiche in den einzelnen Aufnahmen erkannt und in Überlagerung gebracht. Diese Bereiche werden auch Überlappungsbereiche genannt. Bei der Registrierung können jedoch Registrierungsfehler auftreten, die durch zu kleine Überlappungsbereiche durch Aufnahmefehler oder durch fehlerhafte Registrierungsalgorithmen verursacht werden. Die Folge dieser Registrierungsfehler führt dazu, dass die erzeugte Gesamtaufnahme von den tatsächlichen Abmessungen des aufgenommenen Objekts abweicht. Dieser Registrierungsfehler nimmt mit einer zunehmenden Länge einer Registrierungskette aus den einzelnen Aufnahmen zu.

Dies hat den Nachteil, dass der Registrierungsfehler zu einer fehlerhaften Planung des herzustellenden Zahnersatzteils führen kann.

Die Aufgabe der vorliegenden Erfindung besteht also darin, ein Registrierungsverfahren zur Bestimmung einer Lagebeziehung zwischen den einzelnen Aufnahmen bereitzustellen, das den Registrierungsfehler verringert, um anhand der erzeugten Gesamtaufnahme ein passendes Zahnersatzteil herzustellen.

### Darstellung der Erfindung

Die Erfindung betrifft ein Verfahren zur Registrierung einzelner dreidimensionaler optischer Aufnahmen zu einer Gesamtaufnahme einer Zahnsituation umfassend einen Oberkiefer und einen Unterkiefer. Dabei werden ein erstes 3D-Modell eines ersten Teilabschnitts vom Oberkiefer und ein zweites 3D-Modell eines zweiten Teilabschnitts vom Unterkiefer aus den einzelnen Aufnahmen erzeugt. Anschließend wird eine genometrische Lagebeziehung zwischen dem ersten 3D-Modell und dem zweiten 3D-Modell bestimmt. Die Bestimmung der Lagebeziehung erfolgt unter Verwendung einer seitlichen Aufnahme und/oder unter Verwendung eines Kontaktmusters. Die seitliche Aufnahme weist dabei einen Aufnahmebereich auf, der zumindest teilweise den ersten Teilabschnitt des Oberkiefers und zumindest teilweise den zweiten Teilabschnitt des Unterkiefers umfasst. Das Kontaktmuster umfasst dabei mehrere Kontaktbereiche zwischen dem Oberkiefer und dem Unterkiefer. Das Kontaktmuster wird mittels eines Okklusionspapiers vermessen, indem das Okklusionspapier zwischen dem Oberkiefer und dem Unterkiefer angeordnet wird und anschließend der Oberkiefer und der Unterkiefer in eine Schlussbissstellung gebracht werden. Anschließend, nachdem das Okklusionspapier wieder entnommen wurde, erfolgt die Vermessung der einzelnen Aufnahmen, so dass dabei die Kontaktbereiche des Kontaktmusters auf dem Oberkiefer und dem Unterkiefer erfasst werden. Anschließend werden das erzeugte erste 3D-Modell und das erzeugte zweite 3D-Modell mittels eines Computers analysiert werden, um die Lage der Kontaktbereiche zu bestimmen.

Die optische Vermessung kann beispielsweise mittels einer dentalen Kamera erfolgen, die auf einem Streifenprojektionsverfahren, auf einem konfokalen optischen Verfahren oder auf einem Farbstreifenprojektionsverfahren beruht.

Bei dem Farbstreifenprojektionsverfahren wird ein Muster aus mehreren Farbstreifen auf das Objekt projiziert. Anschließend werden die Tiefenkoordinaten für die Messpunkte ermittelt und ein 3D-Modell des Objekts erzeugt. Die Farbstreifen können anhand ihrer Farbe eindeutig identifiziert werden. Für die farbliche Kodierung der Farbstreifen können beispielsweise vier Farbstreifen beziehungsweise drei Farbübergänge verwendet werden. Die Farbstreifen können beispielsweise mittels eines Dias erzeugt werden.

Zur optischen Vermessung kann auch ein anderes Streifenprojektionsverfahren verwendet werden, bei dem die Kodierung der Streifen unter Verwendung unterschiedlicher Lichteigenschaften, wie Intensität, Farbe, Polarisation, Kohärenz, Phase, Kontrast, Ort oder Laufzeit erfolgt.

Die Streifenbreite für solche Streifenprojektionsverfahren kann beispielsweise 130 µm im Messvolumen am zu vermessenden Objekt betragen.

Zur Vermessung kann auch ein sogenanntes konfokales chromatisches Triangulationsverfahren verwendet werden, bei dem die Konzepte einer konfokalen Vermessung und eines Triangulationsverfahrens miteinander kombiniert werden. Die grundlegende Idee besteht darin, dass die Oberfläche eines Objekts so eingefärbt wird, dass von einer Farbe direkt auf eine Höhenkoordinate geschlossen werden kann. Die Farben werden durch eine spektrale Aufspaltung des projizierten Lichtes erzeugt, wobei jede Wellenlänge auf eine eigene Höhenkoordinate fokussiert wird.

Während der Vermessung wird die handgehaltene dentale Kamera relativ zum dentalen Objekt, wie einem Unterkiefer oder einem Oberkiefer, bewegt, wobei in regelmäßigen Zeitabständen die dreidimensionalen optischen Aufnahmen erzeugt werden. Die einzelnen Aufnahmen können beispielsweise mit einer Taktfrequenz zwischen 10 Hz und 20 Hz erzeugt werden. Anschließend können die einzelnen Aufnahmen mittels eines Computers registriert werden und zu einer Gesamtaufnahme zusammengefügt werden.

Im ersten Schritt wird also ein Teilabschnitt des Oberkiefers oder auch der gesamte Oberkiefer vermessen und daraus das erste 3D-Modell erzeugt. Im zweiten Schritt wird dann der zweite Teilabschnitt des Unterkiefers oder der gesamte Unterkiefer vermessen und das zweite 3D-Modell durch Registrierung erzeugt. Das erste 3D-Modell und/oder das zweite 3D-Modell können jedoch durch den Registrierungsfehler oder durch einen Kalibrierungsfehler im Vergleich zu den tatsächlichen Abmessungen des vermessenen Objekts verzerrt sein. Der Kalibrierungsfehler kann beispielsweise durch fehlerhafte Einstellungen der Kameraparameter der dentalen Kamera verursacht werden. Bei einer dentalen Kamera auf der Grundlage des Streifenprojektionsverfahrens sind die maßgeblichen Kameraparameter der Abstand zwischen der Kamera und dem zu vermessenden Objekt, der Einfallswinkel sowie eine Gitterperiode eines Gitters zur Erzeugung eines Streifenmusters.

Die Kameraparameter können auch auf einem Lochkameramodell beruhen, wobei zwischen den intrinsischen und extrinsischen unterschieden wird. Mögliche intrinsische Parameter sind beispielsweise die Brennweite der Kamera, die Pixelkoordinate der Bildmitte und Verzeichnisparameter. Die extrinsischen Parameter können die Rotation und die Translation zwischen Kamera und Projektor umfassen.

Der Registrierungsfehler kann beispielsweise durch die folgenden Faktoren verursacht werden: ein zu kleiner Überlappungsbereich, eine nicht ausreichende Welligkeit der Objektoberfläche im Überlappungsbereich, eine nicht ausreichende Rauheit der Objektoberfläche im Überlappungsbereich, eine zu geringe Anzahl von charakteristischen Geometrien im Überlappungsbereich, wie Zahnhöcker oder Fissuren und/oder eine nicht ausreichende Aufnahmequalität im Überlappungsbereich. Die Registrierung ist beispielsweise in den Fällen fehlerhaft, wenn die dentale Kamera in Relation zum Objekt zu schnell bewegt wird und dadurch die Größe des Überlappungsbereichs unzureichend ist. Ein weiterer Grund könnte sein, dass ein Autofokus der dentalen Kamera unscharf eingestellt ist und dadurch das Objekt undeutlich abgebildet wird, sodass die Aufnahmequalität der Aufnahme nicht ausreichend ist. Ein weiterer Grund könnte sein, dass bewegliche Objekte, wie die Zunge des Patienten oder der Finger des behandelnden Zahnarztes, während der Vermessung erfasst werden. Dies führt dazu, dass die Überlappungsbereiche der Aufnahmen nicht übereinstimmen. Die genannten Gründe könnten also zu einem im Vergleich zum Objekt verzerrten ersten 3D-Modell des Oberkiefers und/oder einem verzerrten zweiten 3D-Modell des Unterkiefers führen.

Die geometrische Lagebeziehung zwischen dem ersten 3D-Modell und dem zweiten 3D-Modell wird also anhand der seitlichen Aufnahme und/oder anhand des Kontaktmusters bestimmt.

Die seitliche Aufnahme kann beispielsweise aus einer labialen Richtung beziehungsweise aus einer bukkalen Richtung oder leicht schräg dazu erfolgen. Maßgeblich ist, dass die seitliche Aufnahme zumindest Teile des ersten Teilabschnitts des Oberkiefers und des zweiten Teilabschnitts des Unterkiefers umfasst. Dadurch ermöglicht die seitliche Aufnahme anhand von charakteristischen Strukturen des Oberkiefers und des Unterkiefers beziehungsweise anhand von an den Zähnen angebrachten Markern die Lagebeziehung zwischen dem ersten 3D-Modell und dem zweiten 3D-Modell zu ermitteln. Zusätzlich zu der ersten seitlichen Aufnahme können auch weitere seitliche Aufnahmen aus verschiedenen Richtungen erfolgen, um die Lagebeziehung für verschiedene Bereiche der 3D-Modelle zu überprüfen. Die seitliche Aufnahme beziehungsweise die bukkale Aufnahme kann beispielsweise im Bereich der Zähne 14, 44 beziehungsweise 24, 34 nach dem FDI-Schema erfolgen.

Das Kontaktmuster kann beispielsweise unter Verwendung eines Okklusionspapiers vermessen werden, wobei die Kontaktbereiche beziehungsweise Kontaktpunkte zwischen dem Oberkiefer und dem Unterkiefer in einer Schlussbissstellung erfasst werden. Anhand dieser Kontaktbereiche kann dann die genaue Lagebeziehung zwischen dem ersten 3D-Modell des Oberkiefers und dem zweiten 3D-Modell des Unterkiefers ermittelt werden.

Das Okklusionspapier ermöglicht es, die Approximalkontakte beziehungsweise Kontaktbereiche des Kontaktmusters zwischen dem Oberkiefer und dem Unterkiefer in der Schlussbissstellung zu vermessen. Anhand des erzeugten Kontaktmusters kann dann computergestützt die Lagebeziehung zwischen dem ersten 3D-Modell und dem zweiten 3D-Modell ermittelt werden. Dies erfolgt dadurch, dass unter Verwendung des vermessenen Kontaktmusters und unter Verwendung der Geometrien des ersten 3D-Modells und des zweiten 3D-Modells simuliert wird, an welchen Kontaktbereichen der Oberkiefer mit dem Unterkiefer in der Schlussbissstellung in Kontakt kommt. Im nächsten Schritt wird als Ergebnis dieser Simulation festgelegt, wo genau die virtuellen Kontaktbereiche auf dem ersten 3D-Modell und dem zweiten 3D-Modell angeordnet sind. Anschließend wird dann die Lagebeziehung zwischen dem ersten 3D-Modell und dem zweiten 3D-Modell ermittelt, indem die entsprechenden virtuellen Kontaktbereiche der beiden 3D-Modelle in Überlagerung gebracht werden oder der Abstand zwischen den Kontaktbereichen minimiert wird.

Anhand der ermittelten geometrischen Lagebeziehung werden das erste 3D-Modell und/oder das zweite 3D-Modell verformt oder ausgerichtet, so dass eine erste Abweichung zwischen ersten virtuellen Kontaktbereichen auf dem ersten 3D-Modell und zweiten virtuellen Kontaktbereichen auf dem zweiten 3D-Modell minimiert wird und/oder dass eine zweite Abweichung zwischen der Anordnung einer ersten virtuelle Oberflächenstruktur des ersten 3D-Modells relativ zu einer zweiten virtuellen Oberflächenstruktur des zweiten 3D-Modells und der Anordnung der entsprechende ersten Oberflächenstruktur des Oberkiefers zu der entsprechenden zweiten Oberflächenstruktur des Unterkiefers aus der seitlichen Aufnahme minimiert wird.

Durch den Registrierungsfehler und/oder den Kalibrierungsfehler kann es dazu kommen, dass das erste 3D-Modell und/oder das zweite 3D-Modell im Vergleich zu den tatsächlichen Abmessungen des vermessenen Objekts verzerrt oder verschoben sind. Dies führt zu der ersten Abweichung zwischen den Kontaktbereichen im Vergleich zum Kontaktmuster und zu der zweiten Abweichung der virtuellen Oberflächenstrukturen im Vergleich zur seitlichen Aufnahme. Zur Korrektur dieses Messfehlers werden also das erste 3D-Modell und/oder das zweite 3D-Modell so verzerrt bzw. verformt, dass die Kontaktbedingungen aus dem Kontaktmuster und die Bedingungen aus einer seitlichen Aufnahme oder aus mehreren seitlichen Aufnahmen erfüllt sind. Dabei werden die erste Abweichung und die zweite Abweichung so weit wie möglich minimiert. Dafür kann beispielsweise die Minimierungsmethode der Summe der Fehlerquadrate verwendet werden. Die Verformung des ersten 3D-Modells bzw. des zweiten 3D-Modells kann mittels eines Verformungsverfahrens erfolgen, bei dem das jeweilige 3D-Modell in unterschiedliche Abschnitte aufgeteilt wird, die über simulierte Federn miteinander verbunden sind. Die simulierten Federkräfte der Federn führen dazu, dass die Verformung gleichmäßig auf diese Abschnitte verteilt wird und das jeweilige der 3D-Modell flexibel verformt wird. Diese Abschnitte können beispielsweise die einzelnen optischen dreidimensionalen Aufnahmen sein, die zum jeweiligen 3D-Modell zusammengefügt wurden.

Anhand der ermittelten geometrischen Lagebeziehung werden das erste 3D-Modell und/oder das zweite 3D-Modell verformt, so dass die ersten virtuellen Kontaktbereiche auf dem ersten 3D-Modell mit den zweiten virtuellen Kontaktbereichen auf dem zweiten 3D-Modell übereinstimmen und/oder dass die erste virtuelle Oberflächenstruktur des ersten 3D-Modells relativ zu der zweiten virtuellen Oberflächenstruktur des zweiten 3D-Modells, so wie die entsprechende erster Oberflächenstruktur des Oberkiefers relativ zu der entsprechenden zweiten Oberflächenstruktur des Unterkiefers aus der seitlichen Aufnahme, angeordnet ist.

Dadurch wird der durch den Registrierungsfehler und den Kalibrierungsfehler entstandene Messfehler vollständig korrigiert.

Ein Vorteil dieses Verfahrens besteht darin, dass unter Verwendung der seitlichen Aufnahme und/oder unter Verwendung des Kontaktmusters eine Überprüfung der erzeugten 3D-Modelle auf eine einfache Art und Weise ermöglicht wird. Dadurch werden der Registrierungsfehler und/oder der Kalibrierungsfehler minimiert.

Vorteilhafterweise können weitere seitliche Aufnahmen zur Bestimmung der Lagebeziehung verwendet werden.

Dadurch wird die Überprüfung der Lagebeziehung primärer Bereiche des Oberkiefers beziehungsweise des Unterkiefers ermöglicht. Die seitlichen Aufnahmen können aus mehreren Richtungen, beispielsweise für die Zahnpaare 14-44, 11-41 und 24-34 nach dem FDI-Schema erfolgen. Dabei können die seitlichen Aufnahmen aus einer labialen beziehungsweise bukkalen Richtung oder aus einer schrägen Richtung erfolgen, die um maximal 30° zu der labialen Richtung angewinkelt ist.

Vorteilhafterweise kann zur Bestimmung der Lagebeziehung unter Verwendung eines Mustererkennungsverfahrens die seitliche Aufnahme nach einer ersten Oberflächenstruktur aus dem ersten 3D-Modell und nach einer zweiten Oberflächenstruktur aus dem zweiten 3D-Modell durchsucht werden, wobei anhand der Anordnung der ersten Oberflächenstruktur relativ zu der zweiten Oberflächenstruktur in der seitlichen Aufnahme die Lagebeziehung zwischen dem ersten 3D-Modell und dem zweiten 3D-Modell bestimmt wird.

Die erste Oberflächenstruktur und die zweite Oberflächenstruktur können charakteristische Strukturen des Oberkiefers beziehungsweise des Unterkiefers, wie bestimmte Zähne, Zahnfleischstrukturen oder auf die Zähne angebrachte Markierungen, sein. Mittels des Mustererkennungsverfahrens wird also die genaue Position dieser Oberflächenstrukturen ermittelt und daraus die Lagebeziehung zwischen dem ersten 3D-Modell und dem zweiten 3D-Modell ermittelt.

Vorteilhafterweise können die Kontaktbereiche des Kontaktmusters lokale Korrespondenzen zwischen dem ersten 3D-Modell und dem zweiten 3D-Modell darstellen.

Die Kontaktbereiche entstehen also durch Kontakt zwischen den Zahnhöckern und den Zahnmulden des Oberkiefers und des Unterkiefers in der Schlussbissstellung und entsprechen somit lokalen Korrespondenzen, die die Ermittlung der Lagebeziehung zwischen den beiden 3D-Modellen ermöglichen.

Vorteilhafterweise kann das zweite 3D-Modell, das eine höhere Messgenauigkeit als das erste 3D-Modell aufweist, unverändert bleiben und das erste 3D-Modell zur Anpassung an das zweite 3D-Modell verformt werden.

Dabei wird also geprüft, ob die Kriterien für eine erfolgreiche Registrierung ausreichend sind. Dabei kann also festgestellt werden, dass das erste 3D-Modell beziehungsweise das zweite 3D-Modell einen kleineren Registrierungsfehler und damit eine höhere Messgenauigkeit als das zweite 3D-Modell beziehungsweise das erste 3D-Modell aufweist. Daraufhin bleibt also das genauere 3D-Modell unverändert und das ungenauere 3D-Modell wird daran angepasst. Dadurch wird erreicht, dass die Abweichung zwischen den 3D-Modellen und den tatsächlichen Abmessungen des Objekts nach der Anpassung möglichst gering ist.

Vorteilhafterweise kann das erste 3D-Modell, das eine höhere Messgenauigkeit als das zweite 3D-Modell aufweist, unverändert bleiben und das zweite 3D-Modell zur Anpassung an das erste 3D-Modell verformt werden.

Vorteilhafterweise kann die Registrierung der einzelnen Aufnahmen zu dem ersten 3D-Modell und zu dem zweiten 3D-Modell unter Verwendung einer globalen Registrierung erfolgen. Bei der globalen Registrierung wird jede zu registrierende Aufnahme sowohl mit einer vorangehenden Aufnahme als auch mit einer weiteren bereits durchgeführten Aufnahme registriert, um einen Registrierungsfehler zu verringern. Die zu registrierende Aufnahme, die vorangehende Aufnahme und die weitere Aufnahme weisen dabei gemeinsame Überlappungsbereiche auf. Die weitere Aufnahme kann die vorvorangehende Aufnahme oder auch eine davor aufgenommen Aufnahme in der Aufnahmereihe sein.

Durch die globale Registrierung wird der Registrierungsfehler dadurch verkleinert, dass jede Aufnahme nicht nur mit der vorherigen Aufnahme verglichen wird, sondern zusätzlich auch mit anderen Aufnahmen verglichen wird, mit denen sie gemeinsame Überlappungsbereiche aufweist. Bei der Registrierung der jeweiligen Aufnahme mit der vorherigen Aufnahme und mit anderen davor aufgenommen Aufnahmen können Widersprüche der Lagebeziehung entstehen, die auf den Registrierungsfehler und/oder auf den Kalibrierungsfehler zurückzuführen sind. Zur Bestimmung der tatsächlichen Lagebeziehungen kann ein Mittelwert der Lagebeziehungen aus der Registrierung zu der vorherigen Aufnahme und den weiteren Aufnahmen berechnet werden, so dass die Widersprüche sich gegenseitig aufheben und der gesamte Registrierungsfehler minimiert wird.

### Kurzbeschreibung der Zeichnungen

Die Erfindung wird anhand der Zeichnungen erläutert. Es zeigt, die
- Fig. 1: eine Skizze zur Verdeutlichung des vorliegenden Verfahrens zur Registrierung, die
- Fig. 2: eine Skizze zur Verdeutlichung der Bestimmung der geometrischen Lagebeziehung zwischen den 3D-Modellen, die
- Fig. 3: zeigt den Oberkiefer und den Unterkiefer aus okklusaler Richtung nach der Markierung der Kontaktbereiche, die
- Fig .4: das erste 3D-Modell vom Oberkiefer und das zweite 3D-Modell des Unterkiefers mit einem Registrierungsfehler, die
- Fig. 5: das Ergebnis der Korrektur aus Fig. 4.

### Ausführungsbeispiel

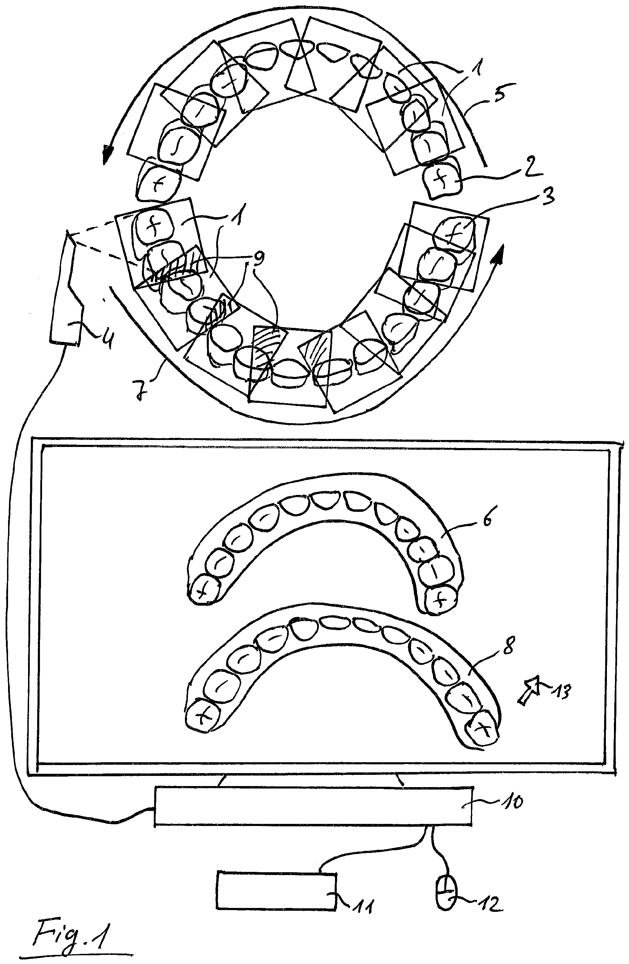

Die Fig. 1 zeigt eine Skizze zur Verdeutlichung des vorliegenden Verfahrens zur Registrierung einzelner dreidimensionaler optischer Aufnahmen 1 zu einer Gesamtaufnahme einer Zahnsituation umfassend einen Oberkiefer 2 und einen Unterkiefer 3. Bei der Vermessung wird eine Dentalkamera, die auf einem Streifenprojektionsverfahren oder auf einen konfokalen optischen Verfahren beruht, im ersten Schritt entlang einer ersten Bewegungsrichtung 5 um den Oberkiefer 2 bewegt, um ein erstes 3D-Modell 6 und anschließend im zweiten Schritt entlang einer zweiten Bewegungsrichtung 7 um den Unterkiefer 3 bewegt, um ein zweites 3D-Modell 8 zu vermessen. Während der Vermessung werden also in regelmäßigen Zeitabständen die dreidimensionalen optischen Aufnahmen erzeugt. Die einzelnen Aufnahmen können beispielsweise mit einer Taktfrequenz zwischen 10 Hz und 20 Hz erzeugt werden. Anschließend werden die einzelnen Aufnahmen 1 unter Verwendung der Überlappungsbereiche 9, die gestrichelt dargestellt sind, miteinander registriert und zu dem ersten 3D-Modell 6 und dem zweiten 3D-Modell 8 zusammengefügt.

Das Erfassen der Messdaten der Dentalkamera 4, die Berechnung der einzelnen Aufnahmen 1, die Registrierung der einzelnen Aufnahmen 1 sowie das Zusammenfügen der einzelnen Aufnahmen 1 zu dem ersten 3D-Modell 6 und dem zweiten 3D-Modell 8 erfolgt mittels eines Computers 10. Der Benutzer hat die Möglichkeit, über Eingabemittel, wie eine Tastatur 11 und eine Maus 12 das erste 3D-Modell 6 und das zweite 3D-Modell 8 über einen Cursor 13 zu verschieben und zu drehen, um die Beobachtungsrichtung zu ändern.

Das erste 3D-Modell 6 und das erste 3D-Modell 8 kann den gesamten Oberkiefer beziehungsweise Unterkiefer oder nur einen Teilabschnitt umfassen.

Zur Erzeugung der Gesamtaufnahme der Zahnsituation ist nun erforderlich, eine geometrische Lagebeziehung zwischen dem ersten 3D-Modell 6 und dem zweiten 3D-Modell 8 zu bestimmen.

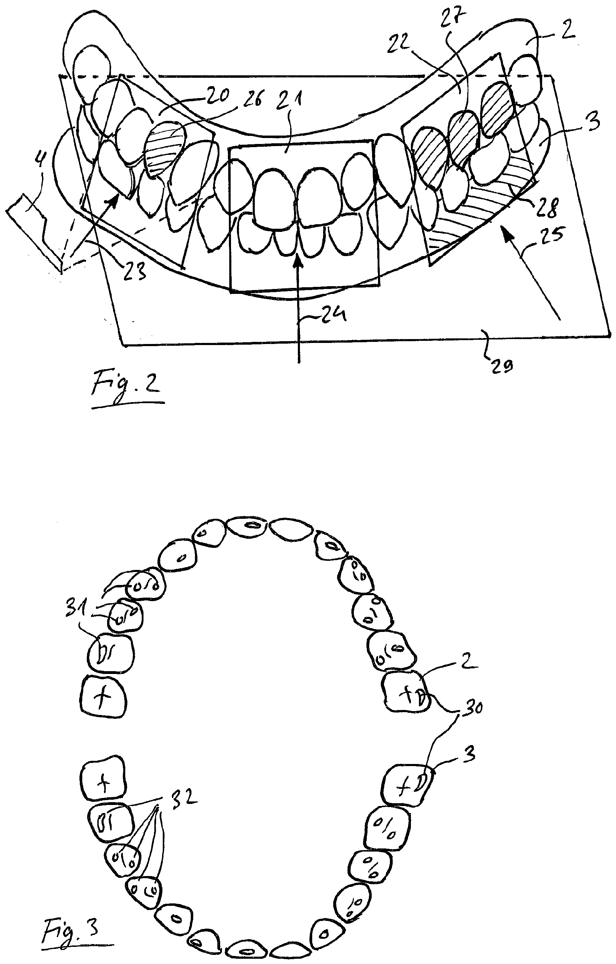

Die Fig. 2 zeigt eine Skizze zur Verdeutlichung der Bestimmung der geometrischen Lagebeziehung zwischen den 3D-Modellen 6 und 8. Unter Verwendung der Dentalkamera 4 aus Fig. 1 werden zusätzliche seitliche Aufnahmen 20, 21 und 22 erzeugt und zwar aus einer ersten Aufnahmerichtung 23, aus einer zweiten Aufnahmerichtung 24 und aus einer dritten Aufnahmerichtung 25. Die seitlichen Aufnahmen 20 und 22 erfolgen also aus bukkaler Richtung im Bereich der Zahnpaare 16-46 und 26-36 nach dem FDI-Schema. Die zweite seitliche Aufnahme 21 erfolgt also aus labialer Richtung im Bereich der frontalen Zahnpaare 11-41 und 21-31 nach dem FDI-Schema. Anschließend werden die seitlichen Aufnahmen 20, 21 und 22 unter Verwendung eines Mustererkennungsverfahrens mittels des Computers 10 aus Fig. 1 nach einer ersten Oberflächenstruktur des ersten 3D-Modells und nach einer zweiten Oberflächenstruktur aus dem zweiten 3D-Modell durchsucht. Die erste Oberflächenstruktur beziehungsweise die zweite Oberflächenstruktur kann ein einzelner Zahn 26, der im vorliegenden Fall dem Zahn 14 nach dem FDI-Schema entspricht, eine Gruppe von Zähnen 27, die gestrichelt dargestellt sind und den Zähnen 24, 25 und 26 nach dem FDI-Schema entsprechen oder auch eine charakteristische Struktur 28 des Zahnfleisches sein. Anhand der Anordnung der ersten Oberflächenstruktur 26, 27 relativ zu der zweiten Oberflächenstruktur 28 in den seitlichen Aufnahmen 20, 21 und 22 kann dann die Lagebeziehung zwischen dem ersten 3D-Modell 6 und dem zweiten 3D-Modell 8 bestimmt werden. Falls das erste 3D-Modell 6 und/oder das zweite 3D-Modell 8 durch einen Registrierungsfehler beziehungsweise einen Kalibrierungsfehler verzerrt werden, kann es dazu kommen, dass die verschiedenen seitlichen Aufnahmen 20, 21 und 22 unterschiedliche widersprüchliche Lagebeziehungen liefern. Diese Widersprüche können zur Korrektur des ersten 3D-Modells 6 und/oder des zweiten 3D-Modells 8 verwendet werden, um eine fehlerfreie Gesamtaufnahme zu erzeugen.

Zusätzlich zu den seitlichen Aufnahmen kann ein Okklusionspapier 29 zwischen dem Oberkiefer 2 und dem Unterkiefer 3 angeordnet werden. Anschließend werden der Oberkiefer 2 und der Unterkiefer 3 in die dargestellte Schlussbissstellung gebracht, wobei eine Farbschicht Okklusionspapiers 29 bestimmte Kontaktbereiche zwischen dem Oberkiefer 2 und dem Unterkiefer 3 einfärbt. Das Okklusionspapier 29 kann wie im dargestellten Fall aus einem einzelnen Blatt oder aus mehreren Streifen bestehen, die zwischen den Oberkiefer 2 und den Unterkiefer 3 geklemmt werden.

Nachdem die Kontaktbereiche mittels des Okklusionspapiers 29 markiert wurden, erfolgt dann die Vermessung des Oberkiefers 2 und des Unterkiefers 3, wie in Fig. 1 dargestellt, wobei das erste 3D-Modell 6 und das zweite 3D-Modell 8 mit den markierten Kontaktbereichen erzeugt werden.

Die Fig. 3 zeigt den Oberkiefer 2 und den Unterkiefer 3 aus okklusaler Richtung nach der Markierung der Kontaktbereiche 30 unter Verwendung des Okklusionspapiers. Dabei entsprechen die ersten Kontaktbereiche 31 am Oberkiefer 2 den zweiten Kontaktbereichen 32 am Unterkiefer 3. Dadurch stellen die ersten Kontaktbereiche 31 und die entsprechenden zweiten Kontaktbereiche 32 lokale Korrespondenzen dar, die eine Ermittlung der geometrischen Lagebeziehung zwischen dem ersten 3D-Modell des Oberkiefers 2 und des zweiten 3D-Modells des Unterkiefers 3 ermöglichen.

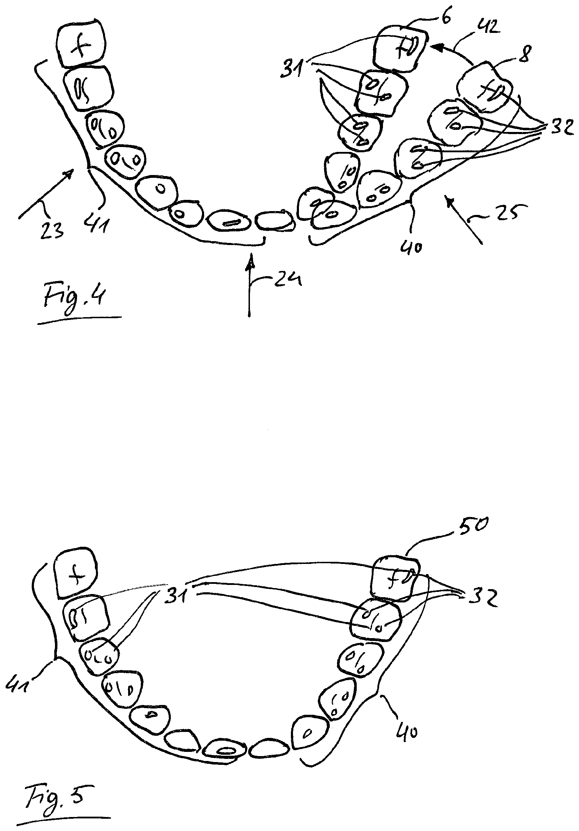

Die Fig. 4 zeigt eine Skizze des ersten 3D-Modells 6 vom Oberkiefer 2 und das zweite 3D-Modell 8 des Unterkiefers 3, wobei durch einen Registrierungsfehler und/oder einen Kalibrierungsfehler das zweite 3D-Modell 8 in einem Bereich 40 deutlich vom ersten 3D-Modell abweicht. In einem Bereich 41 wurde das erste 3D-Modell 6 in Übereinstimmung mit dem zweiten 3D-Modell 8 gebracht. Die Pfeile stellen die Aufnahmerichtungen 23, 24 und 25 für die seitlichen Aufnahmen dar. Die ersten Kontaktbereiche 31 weichen also im ersten Bereich 40 deutlich von den zweiten Kontaktbereichen 32 des zweiten 3D-Modells 8 ab, wobei im zweiten Bereich 41 die ersten Kontaktbereiche 31 mit den zweiten Kontaktbereichen 32 in Übereinstimmung gebracht wurden. Zusätzlich zu den Kontaktbereichen 31 und 32 können auch die seitlichen Aufnahmen 23 und 24 zur Bestimmung der Lagebeziehung und zur Überlagerung der beiden 3D-Modelle 6 und 8 im Bereich 41 verwendet werden.

Zur Korrektur des Registrierungsfehlers und/oder des Kalibrierungsfehlers wird das zweite 3D-Modell 8 entlang einer Verformungsrichtung 42 so verformt, dass eine erste Abweichung zwischen den ersten Kontaktbereichen auf dem ersten 3D-Modell 6 und den zweiten Kontaktbereichen 32 auf dem zweiten 3D-Modell 8 minimiert wird. Als ein weiteres Kriterium für die Korrektur kann auch die seitliche Aufnahme 25 verwendet werden, wobei eine zweite Abweichung zwischen der Anordnung einer ersten virtuellen Oberflächenstruktur 27 des ersten 3D-Modells 6 relativ zu einer zweiten virtuellen Oberflächenstruktur 28 des zweiten 3D-Modells 8 unter Anordnung der entsprechenden Oberflächenstrukturen 27 und 28 auf der seitlichen Aufnahme 25 minimiert wird. Bei diesem Optimierungsprozess kann beispielsweise die Methode der kleinsten Quadrate verwendet werden.

Im vorliegenden Fall weist das erste 3D-Modell eine höhere Messgenauigkeit auf, so dass das mit dem Registrierungsfehler behaftete zweite 3D-Modell 8 entlang der Verformungsrichtung 42 an das erste 3D-Modell 6 angepasst wird.

Alternativ kann auch das zweite 3D-Modell 8 unverändert bleiben und das erste 3D-Modell 6 daran angepasst werden.

Es werden also Bedingungen aus den seitlichen Aufnahmen 23, 24 und 25 sowie die Bedingungen aus den Unterschieden der Kontaktbereiche 31 und 32 verwendet, um durch ein Minimierungsverfahren eine Korrektur des Registrierungsfehlers und/oder des Kalibrierungsfehlers durchzuführen.

Die Fig. 5 zeigt das Ergebnis der Korrektur aus Fig. 4, wobei die ersten Kontaktbereiche 31 des ersten 3D-Modells 6 und die zweiten Kontaktbereiche 32 des zweiten 3D-Modells 8 sowohl im ersten Bereich 40 als auch im zweiten Bereich 41 in Überlagerung gebracht wurden. Das Ergebnis des Verfahrens ist also eine Gesamtaufnahme 50, umfassend das erste 3D-Modell 6 und das zweite 3D-Modell 8, die anhand der Kontaktbereiche 31 und 32 sowie anhand der seitlichen Aufnahmen 23, 24 und 25 aneinander angepasst wurden, um den Registrierungsfehler zu beheben.

### Bezugszeichen

- 1: einzelne dreidimensionale optische Aufnahmen
- 2: Oberkiefer
- 3: Unterkiefer
- 4: Dentalkamera
- 5: erste Bewegungsrichtung
- 6: erstes 3D-Modell
- 7: zweite Bewegungsrichtung
- 8: zweites 3D-Modell
- 9: Überlappungsbereiche
- 10: Computer
- 11: Tastatur
- 12: Maus
- 13: Cursor
- 20-22: seitliche Aufnahmen
- 23: erste Aufnahmerichtung
- 24: zweite Aufnahmerichtung
- 25: dritte Aufnahmerichtung
- 26: einzelner Zahn
- 27: Gruppe von Zähnen
- 28: charakteristische Struktur des Zahnfleisches
- 29: Okklusionspapier
- 30: Markierungen der Kontaktbereiche
- 31: erste Kontaktbereiche
- 32: zweite Kontaktbereiche
- 40: erster Bereich
- 41: zweiter Bereich
- 42: Verformungsrichtung
- 50: Gesamtaufnahme

## Patentansprüche

1. Verfahren zur Registrierung einzelner dreidimensionaler optischer Aufnahmen (1) zu einer Gesamtaufnahme (50) einer Zahnsituation umfassend einen Oberkiefer (2) und einen Unterkiefer (3), wobei ein erstes virtuelles 3D-Modell (6) eines ersten Teilabschnitts vom Oberkiefer und ein zweites virtuelles 3D-Modell (8) eines zweiten Teilabschnitts vom Unterkiefer aus den einzelnen Aufnahmen erzeugt werden, wobei, eine geometrische Lagebeziehung zwischen dem ersten virtuellen 3D-Modell (6) und dem zweiten virtuellen 3D-Modell (8) bestimmt wird, wobei die Bestimmung der Lagebeziehung unter Verwendung eines Kontaktmusters (31, 32) erfolgt, wobei das Kontaktmuster mehrere Kontaktbereiche (31, 32) zwischen dem Oberkiefer und dem Unterkiefer umfasst, wobei das Kontaktmuster (30, 31, 32) mittels eines Okklusionspapiers (29) vermessen wird, indem das Okklusionspapier (29) zwischen dem Oberkiefer (2) und dem Unterkiefer (3) angeordnet wird und anschließend der Oberkiefer (2) und der Unterkiefer (3) in eine Schlussbissstellung gebracht werden, wobei anschließend nachdem das Okklusionspapier wieder entnommen wurde die Vermessung der einzelnen Aufnahmen (1) erfolgt, so dass dabei die Kontaktbereiche des Kontaktmusters auf dem Oberkiefer (2) und dem Unterkiefer (3) erfasst werden, wobei das erzeugte erste virtuelle 3D-Modell (6) und das erzeugte zweite virtuelle 3D-Modell (8) mittels eines Computers (10) analysiert werden, um die Lage der Kontaktbereiche auf dem Oberkiefer und dem Unterkiefer zu bestimmen, wobei unter Berücksichtigung der ermittelten geometrischen Lagebeziehung das erste virtuelle 3D-Modell (6) und/oder das zweite virtuelle 3D-Modell (8) verformt werden, so dass eine Abweichung zwischen ersten virtuellen Kontaktbereichen (31) auf dem ersten virtuellen 3D-Modell (6) und zweiten virtuellen Kontaktbereichen (32) auf dem zweiten virtuellen 3D-Modell (8) minimiert wird, wobei anhand der ermittelten geometrischen Lagebeziehung das erste virtuelle 3D-Modell (6) und/oder das zweite virtuelle 3D-Modell (8) verformt werden, so dass die ersten virtuellen Kontaktbereiche (31) auf dem ersten virtuellen 3D-Modell (6) mit den zweiten virtuellen Kontaktbereichen (32) auf dem zweiten virtuellen 3D-Modell (8) übereinstimmen.

2. Verfahren nach Anspruch 1, wobei die Kontaktbereiche (31, 32) des Kontaktmusters lokale Korrespondenzen zwischen dem ersten virtuellen 3D-Modell (6) und dem zweiten virtuellen 3D-Modell (8) darstellen.

3. Verfahren nach Anspruch 1, wobei das zweite virtuelle 3D-Modell (8), das eine höhere Messgenauigkeit als das erste virtuelle 3D-Modell (6) aufweist, unverändert bleibt und das erste virtuelle 3D-Modell (6) zur Anpassung an das zweite virtuelle 3D-Modell (8) verformt wird.

4. Verfahren nach Anspruch 1, wobei das erste virtuelle 3D-Modell (6), das eine höhere Messgenauigkeit als das zweite virtuelle 3D-Modell (8) aufweist, unverändert bleibt und das zweite virtuelle 3D-Modell (8) zur Anpassung an das erste virtuelle 3D-Modell (6) verformt wird.

5. Verfahren nach einem der Ansprüche 1 bis 4, wobei die Registrierung der einzelnen Aufnahmen zu dem ersten virtuellen 3D-Modell (6) und zu dem zweiten virtuellen 3D-Modell (8) unter Verwendung einer globalen Registrierung erfolgt, wobei jede zu registrierende Aufnahme sowohl mit einer vorangehenden Aufnahme als auch mit einer weiteren bereits durchgeführten Aufnahme registriert wird, um einen Registrierungsfehler zu verringern, wobei die zu registrierende Aufnahme, die vorangehende Aufnahme und die weitere Aufnahme gemeinsame Überlappungsbereiche aufweisen.

## Claims

1. Method for recording individual three-dimensional optical images (1) to form an overall image (50) of a tooth situation comprising an upper jaw (2) and a lower jaw (3), wherein a first virtual 3D model (6) of a first subsection of the upper jaw and a second virtual 3D model (8) of a second subsection of the lower jaw are generated from the individual images, wherein a geometric positional relationship between the first virtual 3D model (6) and the second virtual 3D model (8) is determined, wherein the positional relationship is determined using a contact pattern (31, 32), wherein the contact pattern comprises a plurality of contact areas (31, 32) between the upper jaw and the lower jaw, wherein the contact pattern (30, 31, 32) is measured with the aid of an occlusion paper (29) by placing the occlusion paper (29) between the upper jaw (2) and the lower jaw (3) and then bringing the upper jaw (2) and the lower jaw (3) into a closed bite position, wherein subsequently, after the occlusion paper has been removed again, the individual images (1) are measured such that the contact areas of the contact pattern on the upper jaw (2) and the lower jaw (3) are recorded, wherein the generated first virtual 3D model (6) and the generated second virtual 3D model (8) are analyzed by means of a computer (10) to determine the position of the contact areas on the upper jaw and the lower jaw, wherein, taking into account the determined geometric positional relationship, the first virtual 3D model (6) and/or the second virtual 3D model (8) are deformed to minimize a deviation between first virtual contact areas (31) on the first virtual 3D model (6) and second virtual contact areas (32) on the second virtual 3D model (8), wherein, using the determined geometric positional relationship, the first virtual 3D model (6) and/or the second virtual 3D model (8) are deformed such that the first virtual contact areas (31) on the first virtual 3D model (6) correspond with the second virtual contact areas (32) on the second virtual 3D model (8).

2. Method according to Claim 1, wherein the contact areas (31, 32) of the contact pattern represent local correspondences between the first virtual 3D model (6) and the second virtual 3D model (8).

3. Method according to Claim 1, wherein the second virtual 3D model (8), which has a higher measuring precision than the first virtual 3D model (6), remains unchanged and the first virtual 3D model (6) is deformed to match the second virtual 3D model (8).

4. Method according to Claim 1, wherein the first virtual 3D model (6), which has a higher measuring precision than the second virtual 3D model (8), remains unchanged and the second virtual 3D model (8) is deformed to match the first virtual 3D model (6).

5. Method according to any of Claims 1 to 4, wherein the individual images for the first virtual 3D model (6) and the second virtual 3D model (8) are recorded using an overall recording method, wherein, to reduce a recording error, each image to be recorded is recorded with both a preceding image and an additional, already taken image, wherein the image to be recorded, the preceding image and the additional image have common overlapping regions.

## Revendications

1. Procédé de recalage de prises de vue optiques tridimensionnelles (1) individuelles permettant de former une prise de vue globale (50) d'une situation dentaire comprenant un maxillaire supérieur (2) et un maxillaire inférieur (3), un premier modèle en 3D virtuel (6) d'une première section partielle du maxillaire supérieur et un deuxième modèle en 3D virtuel (8) d'une deuxième section partielle du maxillaire inférieur étant produits à partir des prises de vue individuelles, une relation entre les positions géométriques du premier modèle en 3D virtuel (6) et du deuxième modèle en 3D virtuel (8) étant déterminée, la détermination de la relation entre les positions étant effectuée au moyen d'un motif de contact (31, 32), le motif de contact comprenant plusieurs zones de contact (31, 32) entre le maxillaire supérieur et le maxillaire inférieur, le motif de contact (30, 31, 32) étant mesuré au moyen d'un papier d'occlusion (29) en plaçant le papier d'occlusion (29) entre le maxillaire supérieur (2) et le maxillaire inférieur (3) puis en plaçant le maxillaire supérieur (2) et le maxillaire inférieur (3) en position occlusive, la mesure des prises de vue individuelles (1) étant effectuée subséquemment après le retrait du papier d'occlusion, en produisant ainsi un enregistrement des zones de contact du motif de contact sur le maxillaire supérieur (2) et sur le maxillaire inférieur (3), le premier modèle en 3D virtuel (6) produit et le deuxième module en 3D virtuel (8) produit étant analysés au moyen d'un ordinateur (10) afin de déterminer la position des zones de contact sur le maxillaire supérieur et le maxillaire inférieur et, compte tenu de la relation entre les positions géométriques déterminée, le premier modèle en 3D virtuel (6) et/ou le deuxième modèle en 3D virtuel (8) étant déformés de manière à minimaliser une aberration entre des premières zones de contact virtuelles (31) présentes sur le premier modèle en 3D virtuel (6) et des deuxièmes zones de contact virtuelles (32) présentes sur le deuxième modèle en 3D virtuel (8), le premier modèle en 3D virtuel (6) et/ou le deuxième modèle en 3D virtuel (8) étant déformés à l'aide de la relation entre les positions géométriques déterminée, de manière que les premières zones de contact virtuelles (31) présentes sur le premier modèle en 3D virtuel (6) coïncident avec les deuxièmes zones de contact virtuelles (32) présentes sur le deuxième modèle en 3D virtuel (8).

2. Procédé selon la revendication 1, dans lequel les zones de contact (31, 32) du motif de contact représentent des correspondances locales entre le premier modèle en 3D virtuel (6) et le deuxième modèle en 3D virtuel (8).

3. Procédé selon la revendication 1, dans lequel le deuxième modèle en 3D virtuel (8), qui présente une précision de mesure supérieure à celle du premier modèle en 3D virtuel (6), reste inchangé et le premier modèle en 3D virtuel (6) est déformé pour être adapté au deuxième modèle en 3D virtuel (8).

4. Procédé selon la revendication 1, dans lequel le premier modèle en 3D virtuel (6), qui présente une précision de mesure supérieure à celle du deuxième modèle en 3D virtuel (8), reste inchangé et le deuxième modèle en 3D virtuel (8) est déformé pour être adapté au premier modèle en 3D virtuel (6).

5. Procédé selon l'une des revendications 1 à 4, dans lequel le recalage des prises de vue individuelles est effectué par rapport au premier modèle en 3D virtuel (6) et au deuxième modèle en 3D virtuel (8) en utilisant un recalage global, dans lequel chaque prise de vue à recaler est recalée aussi bien avec une prise de vue précédente qu'avec une prise de vue suivante déjà réalisée, afin de réduire une erreur de recalage, et dans lequel la prise de vue à recaler, la prise de vue précédente et la prise de vue suivante présentent des zones de chevauchement communes.
